# FASCICULE DE BREVET EUROPEEN

(11) **EP 0 684 672 B1**
(45) Date de publication et mention de la délivrance du brevet: **23.12.1998**
(21) Numéro de dépôt: 95410043.4
(22) Date de dépôt: 11.05.1995
(51) Int. Cl.: H02B 1/30

(54) **Coffret notamment pour appareillage électrique basse tension**
Gehäuse, insbesondere für Niederspannungsgeräte
Cabinet, especially for low voltage apparatus

(30) Priorité: 25.05.1994 FR 9406572
(43) Date de publication de la demande: 29.11.1995
(73) Titulaire: SCHNEIDER ELECTRIC SA, 92100 Boulogne Billancourt (FR)
(72) Inventeur: De Palma, François, F-38050 Grenoble Cedex 09 (FR); Dode, Gérard, F-38050 Grenoble Cedex 09 (FR); Escalera, Jean, F-38050 Grenoble Cedex 09 (FR)
(74) Mandataire: Hecké, Gérard

(56) Documents cités:
- AT-A- 386 494
- DE-A- 1 659 955
- DE-A- 2 302 988
- DE-U- 8 800 223
- GB-A- 872 080
- US-A- 2 878 955
- US-A- 3 360 321
- US-A- 3 618 804

## Description

La présente invention concerne un coffret destiné notamment à recevoir un appareillage électrique basse tension utilisé par exemple pour l'alimentation d'une installation électrique.

Sous sa forme la plus générale, un tel coffret est constitué par un boîtier de forme parallélépipédique comprenant principalement d'une part, une paroi de fond sous forme de plaque métallique fixée par des moyens de fixation appropriés, par ses bords supérieur et inférieur, à une paroi supérieure formant toit et à une paroi inférieure formant support, et par ses deux bords latéraux opposés à deux parois latérales, et d'autre part, un cadre fixé autour de l'ouverture du boîtier dans un but notamment d'étanchéité entre le boîtier et un panneau avant monté articulé le long des bords latéraux dudit cadre.

On connaît par exemple un coffret électrique tel que décrit dans le document de brevet FR-2.604.848 dans lequel ledit cadre est constitué par quatre côtés latéraux dont les côtés supérieur et inférieur sont formés par une pièce formant déflecteur, lesdites pièces étant munies de feuillures permettant leur emboîtement sur la tranche de la paroi supérieure du boîtier. A chacune des extrémités de ces pièces est associée une ferrure en équerre comportant une platine permettant sa fixation par vis sur le boîtier et une aile qui est adaptée à permettre l'articulation de la porte. Ainsi, toutes les ferrures étant identiques, la porte peut être montée articulée le long d'un côté ou de l'autre du coffret de façon à permettre une ouverture vers la droite ou vers la gauche du coffret.

Le document US-A-2878955 se rapporte à un coffret électrique possédant un cadre destiné à être fixé par des vis aux quatre coins des bords avant des parois latérales du coffret.

Or, ces coffrets connus présentent un certain nombre d'inconvénients qui tiennent principalement en ce qu'ils nécessitent l'utilisation de nombreux éléments d'assemblage tel que vis, rivets, paumelles et butées, et ceci surtout si le coffret est adapté pour une ouverture de la porte vers la droite ou vers la gauche, d'où il résulte un montage du coffret relativement long et un coût de fabrication important.

L'invention a pour but de proposer un coffret d'appareillage électrique de conception simple et de montage aisé permettant de conserver une standardisation et présentant un coût de fabrication réduit.

Le coffret selon l'invention est caractérisé en ce que ledit cadre peut être fixé par ses deux bords latéraux sur respectivement les deux bords avant des deux parois latérales du coffret, suivant deux positions inverses du cadre obtenues par une rotation de 180° dudit cadre autour de son axe, permettant respectivement une ouverture du panneau avant d'un côté ou de l'autre du coffret, la fixation dudit cadre étant réalisée par l'intermédiaire d'agrafes ou d'ouvertures prévues dans les bords latéraux du cadre, et coopérant respectivement avec des ouvertures ou agrafes conjuguées prévues dans les bords avant des parois latérales précitées, et que lesdites agrafes possèdent des orientations opposées le long des bords latéraux du cadre ou des parois.

Selon une caractéristique particulière, le cadre précité comporte une paroi frontale présentant une ouverture et deux parois latérales opposées dont les bords latéraux sont pliés en équerre et comportent les agrafes ou ouvertures précitées.

Selon une autre caractéristique particulière, les agrafes précitées sont formées par des languettes réalisées par découpage et déformation de la matière des parois dans lesquelles elles sont formées et s'étendent sensiblement parallèlement à ces parois.

Selon une autre caractéristique particulière, les deux bords latéraux du cadre comportent respectivement deux séries d'agrafes, orientées respectivement vers le haut et vers le bas du coffret, les agrafes d'une série étant décalées en hauteur par rapport à celles de l'autre série, les deux séries d' agrafes coopérant avec deux séries d'ouvertures correspondantes prévues dans les deux bords avant pliés en équerre des deux parois latérales du coffret.

Selon une autre caractéristique particulière, le coffret comporte en outre une ferrure formée d' une platine dont les deux extrémités opposés sont pliées en équerre et sont destinées à être introduites dans des fentes correspondantes prévues le long d'un côté du cadre précité pour constituer deux paumelles permettant l'articulation du panneau avant.

Selon une autre caractéristique particulière, la fixation de la ferrure sur la cadre est réalisée par soudage de la platine sur la face arrière de la paroi frontale du cadre.

Avantageusement, l'un des bords longitudinaux de la platine précitée est replié deux fois en équerre, de façon à former deux ailes perpendiculaires destinées à être introduites dans l'ouverture du cadre lors du montage des paumelles, la seconde aile formée constituant alors une butée de limitation de l'ouverture du panneau avant.

Avantageusement l'ouverture du cadre précité comporte deux bords respectivement supérieur et inférieur pliés en équerre.

Selon une autre caractéristique, le coffret comporte en outre une seconde ferrure constituée d'une platine comportant au moins un bord longitudinal plié en équerre et fixé sur la face interne du cadre après introduction de la platine dans l'ouverture du cadre, ladite platine formant avec la première aile de la première ferrure et les deux bords supérieur et inférieur pliés en équerre de l'ouverture du cadre, un autre cadre en saillie vers l'avant du coffret.

De préférence, les bords arrière et supérieur des parois latérales précitées sont pliés en équerre et comportent des ouvertures ou agrafes coopérant avec des agrafes ou respectivement des ouvertures prévues le long des bords latéraux de la paroi de fond précitée, et respectivement de la paroi formant toit.

De préférence, le bord supérieur du cadre est plié en équerre et constitue une surface d'appui comportant des agrafes ou des ouvertures destinées à coopérer avec des ouvertures ou des agrafes prévues le long du bord avant du toit.

Avantageusement, les paumelles précitées sont reliées de manière articulée à une porte réversible comportant deux supports de filerie intégrés et réalisée par découpage et pliage à partir d'une tôle unique.

Mais d'autres avantages de l'invention apparaîtront mieux dans la description détaillée qui suit se réfère aux dessins annexés donnés uniquement à titre d'exemple et dans lesquels :

La figure 1 est une vue en perspective d'un coffret conforme à l'invention.

La figure 2 est une vue éclatée de la précédente.

La figure 3 est une vue en perspective illustrant plus particulièrement le cadre préalablement au montage des moyens d'articulation.

La figure 4 est une vue similaire à la précédente, les moyens d'articulation étant montés dans le cadre.

La figure 5 est une vue arrière du cadre précité.

la figure 6 est une vue en coupe suivant C-C de la figure 5.

Les figures 7, 8, 9, 10 et 11 illustrent la paroi latérale droite du coffret respectivement dans une vue de droite, de face, de dessus, en coupe suivant A-A de la figure 8 et de gauche.

La figure 12 est une vue en perspective d'une ferrure comportant les moyens d'articulation et la butée de porte.

La figure 13 est une vue de face du panneau avant en position déployée.

La figure 14 est une vue intérieure de la porte en position d'utilisation, et

La figure 15 est une vue en coupe suivant B-B de la figure précédente.

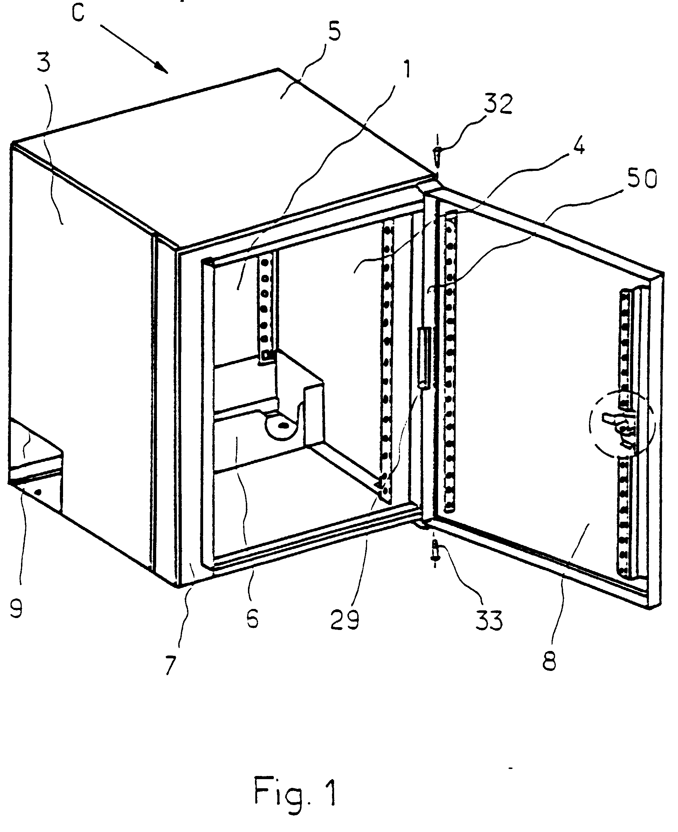

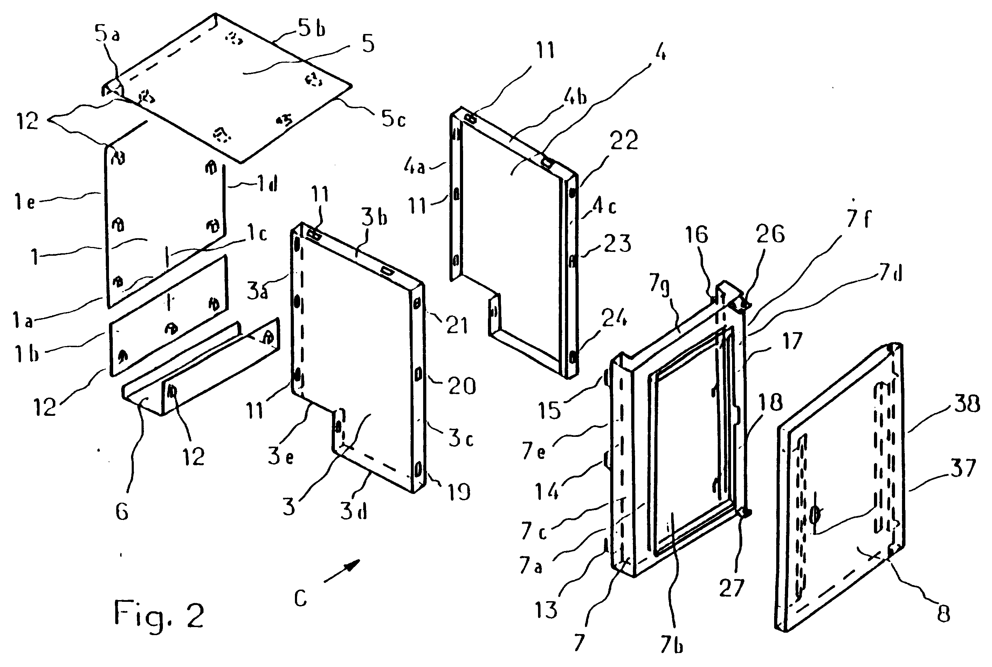

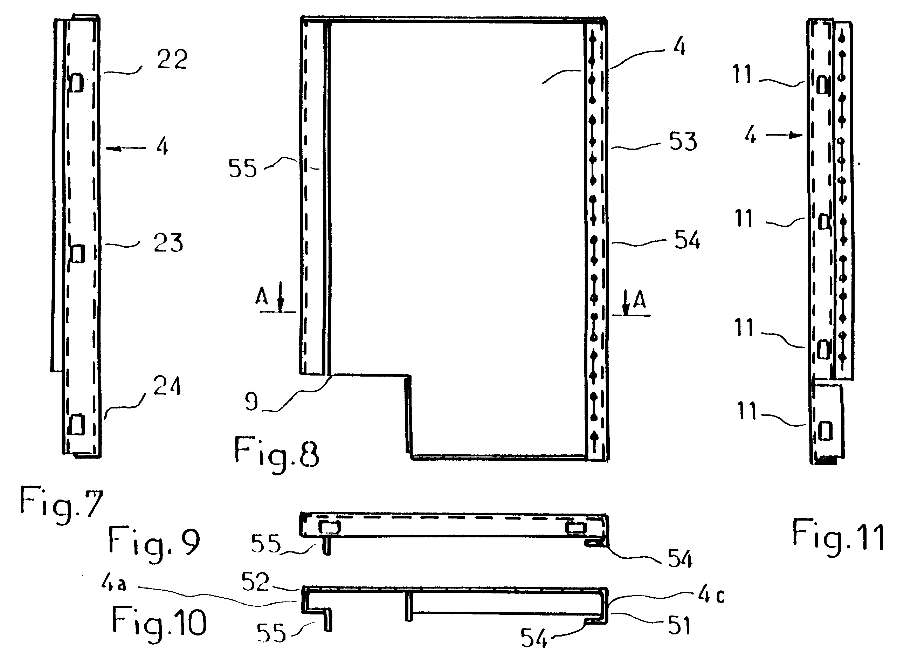

Sur les figures 1 et 2, on voit un coffret métallique C conforme à l'invention destiné à recevoir un appareillage électrique (non représenté) et utilisé pour assurer l'alimentation d'une installation électrique. Ce coffret C comprend principalement une paroi de fond 1 constituée de deux plaques métalliques 1a, 1b solidarisées l'une à l'autre par l'intermédiaire d'une vis lc, deux parois latérales opposées 3, 4, une paroi supérieure 5 formant toit, une goulotte de filerie 6, un cadre 7 et un panneau avant ou porte 8. Sur ces figures, ainsi que sur les figures 7 à 11, on voit que les parois latérales 3, 4 du coffret C sont constituées chacune par un flasque de forme générale rectangulaire comportant à sa partie inférieure un évidement rectangulaire 9 destiné au logement de l'une des extrémités de la goulotte précitée 6, et dont presque tous les bords 3a, 3b, 3c, 3d, 3e sont pliés en équerre et comportent des ouvertures rectangulaires 11. Les ouvertures 11 prévues sur les bords arrière 3a, 4a et supérieurs 3b, 4b des parois latérales 3, 4 sont destinées à coopérer avec des agrafes en forme de languettes 12 prévues sur les bords latéraux 1d, 1e de la paroi de fond 1 et les bords latéraux 5a,5b de la paroi formant toit 5 pour réaliser la fixation de ces parois latérales 3, 4 à la paroi de fond 1 et au toit 5. On notera que la fixation de la goulotte précitée 6 au fond 1b et aux parois latérales 3,4, est également réalisée au moyen de mêmes agrafes 12, et que pour la fixation du boîtier C sur une cellule seront utilisés les éléments de fixation des tôles de toit de celle-ci.

Les agrafes précitées 12 sont réalisées par découpage et déformation de la tôle des parois concernées et forment des languettes s'étendant sensiblement parallèlement à la surface des parois dans lesquelles elles sont formées.

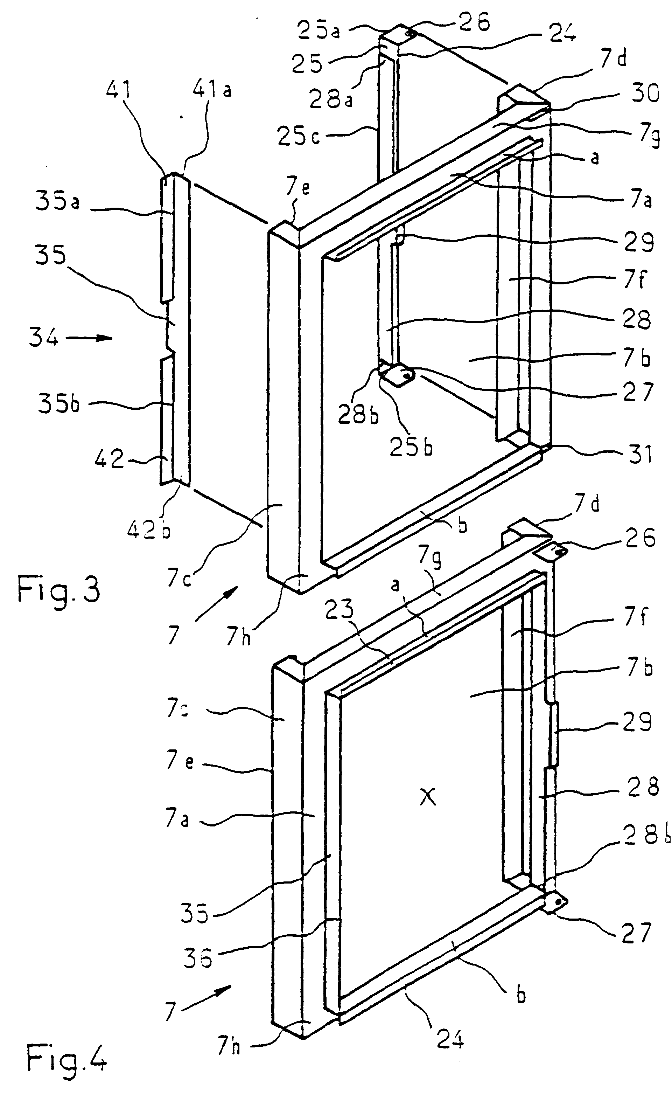

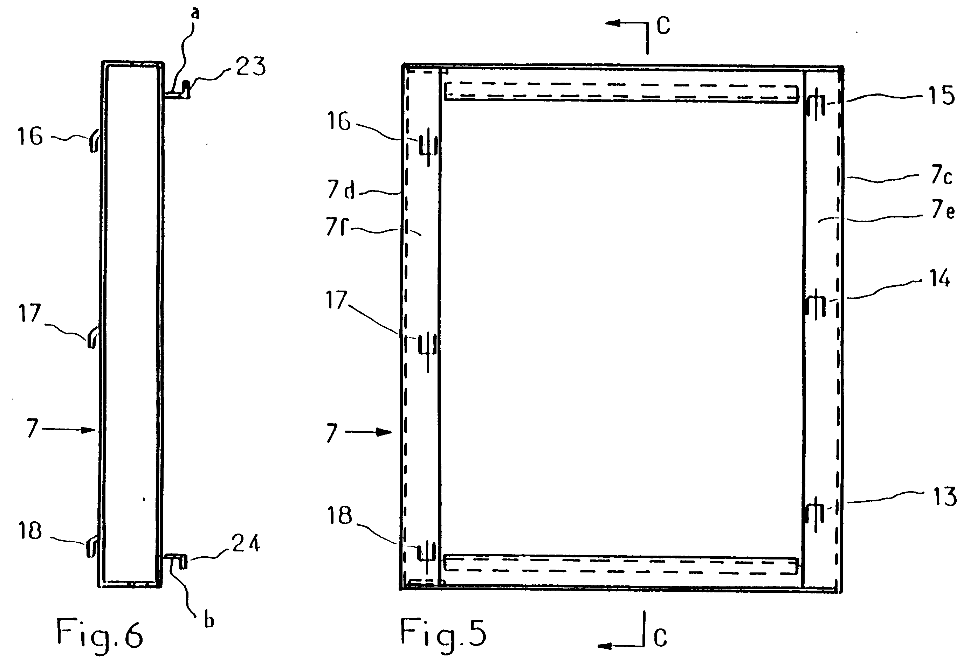

En se reportant plus particulièrement aux figures 1 à 6 et conformément à une réalisation particulière de l'invention, on voit que le cadre 7 destiné à être interposé entre l'ouverture du coffret C et le panneau avant 8, est constitué par une paroi dite frontale 7a dans laquelle est ménagée une ouverture rectangulaire 7b et deux parois latérales 7c, 7d dont les bords longitudinaux 7e,7f sont pliés en équerre et comportent des moyens de fixation du cadre 7 aux parois latérales 3, 4 du coffret C.
Ces moyens de fixation sont constitués par deux séries de trois agrafes (13,14,15;16,17,18) telles que celles décrites précédemment, qui sont destinées à s'engager respectivement dans deux séries de trois ouvertures (19,20,21;22,23,24) prévues respectivement sur les deux bords avant pliés en équerre 3c,4c des deux parois latérales 3,4 du coffret. On voit en particulier sur les figures 2 et 5, d'une part, que les agrafes 13,14,15 réalisées le long du bord 7e de la paroi latérale gauche 7c du cadre 7 sont dirigées vers le haut alors que celles (16,17,18) réalisées dans la paroi latérale droite 7d du cadre 7 sont dirigées vers le bas, d'autre part, que les agrafes situées à droite 16,17,18 sont décalées en hauteur par rapport à celles 13,14,15 qui sont situées à gauche. Cette disposition permet une fixation du cadre 7 sur les parois latérales 3,4 suivant deux positions inversées à une même hauteur.
On notera en se référant en particulier aux figures 3 et 4 que les bords supérieur et inférieur a,b de l'ouverture 7b du cadre 7 sont pliés deux fois en équerre vers l'avant de façon à former deux éléments d'étanchéité 23,24 destinés à assurer la compatibilité électromagnétique. On notera également que les bords respectivement supérieur et inférieur 7g,7h du cadre 7 sont pliés en équerre et que le bord supérieur 7g est fixé au bord avant 5c du toit 5 par les moyens d'agrafage conformes à ceux précités.

En se référant plus particulièrement aux figures 7 à 11, on remarquera que les bords avant 3c,4c des parois latérales 3,4 ont été pliés deux fois en équerre, alors que les bords arrière 3a,4a ont été pliés trois fois en équere. Les moyens d'agrafage précitées 11 et 19 à 24 ont été réalisés dans les premières ailes formées 51 et 52 et des orifices 53 destinés à la fixation d'appareillage électrique ont été réalisés dans la seconde aile 54 du bord avant 4c,3c et la troisième aile 55 des bords arrière 3a,4a.

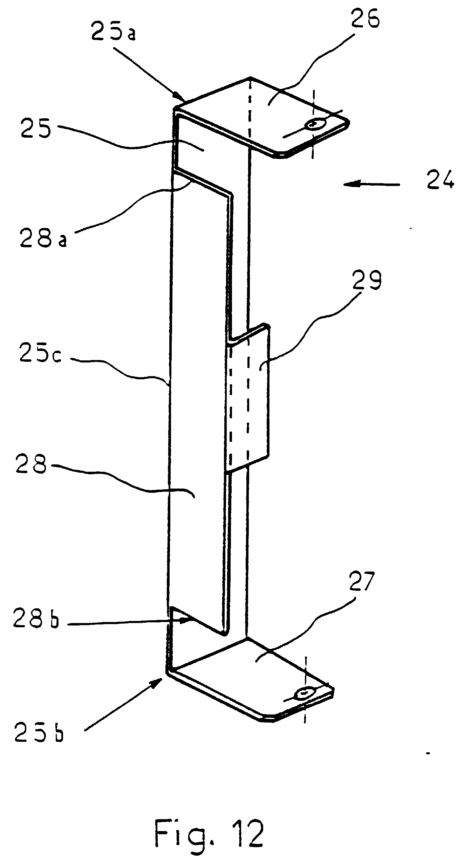

On décrira ci-après les moyens d'articulation du panneau avant sur le cadre précité 7, en référence aux figures 1,3,4 et 12. Selon une réalisation particulière de l'invention, ces moyens comprennent une ferrure 24 constituée d'une platine 25 dont deux bords opposés 25a,25b sont pliés en équerre pour former des ailes 26,27 parallèles l'une par rapport à l'autre et dont l'un des bords longitudinal 25c est plié deux fois en équerre formant deux ailes de différentes hauteurs 28,29. Cette ferrure 24 est destinée à être montée sur le cadre 7 de façon que ses deux ailes parallèles 26.27 soient respectivement introduites dans deux fentes 30,31 correspondantes prévues dans l'un des côtés du cadre 7 et forment ainsi des paumelles destinées à coopérer avec des gonds 32,33 représentés en figure 1 pour réaliser l'articulation de la porte 8. Lors de ce montage, la première aile 28 formée latéralement sur la platine 25 lorsqu'introduite dans l'ouverture 7b du cadre 7 formera un rebord latéral en saillie vers l'avant du coffret C, alors que la seconde aile 29 de longueur inférieure à la précédente formera une butée de limitation de l'ouverture de la porte 8. Sur la figure 3 en particulier, on voit que le coffret comporte une seconde ferrure 34 constituée d'une platine 35 présentant deux bords longitudinaux 35a,35b repliés en équerre pour former deux ailes 41,42 destinées à être fixées le long d'un côté de la face interne de la paroi frontale 7a du cadre 7 aprés introduction de la platine 35 dans l'ouverture 7b du cadre 7, la platine 35 formant alors un second rebord latéral en saillie vers l'avant. Les extrêmités 28a, 28b, 41a, 42b des deux rebords en saillie vers l'avant 28,35 aboutent les extrémités des deux rebords supérieur a et inférieur b de l'ouverture 7b du cadre 7, de façon à former un cadre 36 en saillie vers l'avant du plan de l'ouverture 7b.

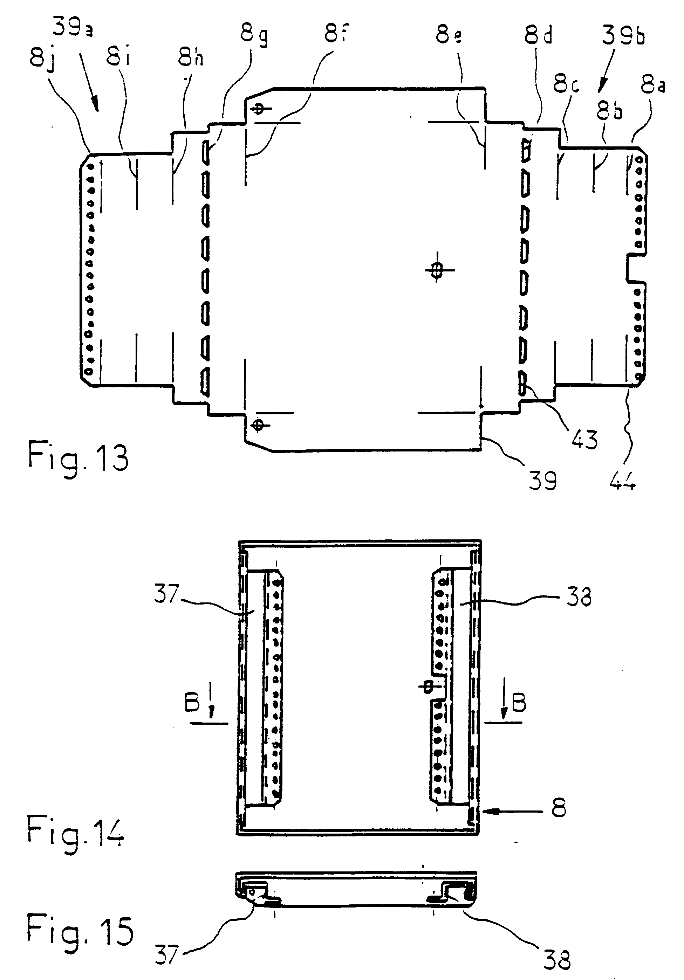

On décrira maintenant la porte réversible 8 destinée à être montée articulée sur le coffret C par l'intermédiaire des paumelles précitées 26,27 en référence aux figures 13,14 et 15. Cette porte 8 est réalisée à partir d'une tôle unique 39 présentant à chacune de ses extrémités, 39a.39b des lignes de pliage (8a à 8j), lesquelles permettent la réalisation de deux supports de filerie 37,38 s'étendant le long des bords latéraux de ladite porte 8. On remarquera que deux des lignes de pliage 8d,8g comportent des ouvertures trapézoïdales 43 facilitant le pliage, lequel s'effectue sur la ligne précise des points faibles, et qu'une rangée d'orifices de fixation 44 est également prévue le long de chaque bord latéral de la tôle précitée 39.

On voit ainsi que la réalisation des deux paumelles et de la butée sur une même pièce qui sert à la fois pour une ouverture vers la droite ou vers la gauche du panneau avant, facilite considérablement le montage et réduit le coût de fabrication du coffret.

On a donc réalisé grâce à l'invention un coffret pour appareillage électrique basse tension de conception simple, réalisé à partir d'un nombre limité d'éléments standards et dont l'assemblage est particulièrement rapide et simple.

## Revendications

1. Coffret destiné notamment à recevoir un appareillage électrique et du genre constitué par un boîtier parallélépipèdique comprenant principalement une paroi de fond fixée par ses deux bords latéraux opposés respectivement à deux parois latérales et par ses bords inférieur et supérieur respectivement à une paroi supérieure formant toit et une paroi inférieure formant support, un cadre coiffant l'ouverture du coffret délimitée par les bords avant des parois latérales et supérieure précitées, et un panneau avant monté articulé sur l'un des bords latéraux dudit cadre pour permettre l'ouverture ou la fermeture dudit coffret,
caractérisé en ce que ledit cadre (7) peut être fixé par ses deux bords latéraux (7e,7f) sur respectivement les deux bords avant (3c,4c) des deux parois latérales (3,4) du coffret C, suivant deux positions inverses du cadre (7) obtenues par une rotation de 180° dudit cadre autour de son axe X, permettant respectivement une ouverture du panneau avant (8) d'un côté ou de l'autre du coffret (C), la fixation dudit cadre (7) étant réalisée par l'intermédiaire d'agrafes (13 à 18) ou d'ouvertures prévues dans les bords latéraux (7e,7f) du cadre (7), et coopérant respectivement avec des ouvertures (19 à 24) ou agrafes conjuguées prévues dans les bords avant (3c,4c) des parois latérales précitées (3,4), et que lesdites agrafes possèdent des orientations opposées le long des bords latéraux du cadre ou des parois.

2. Coffret selon la revendication 1, caractérisé en ce que le cadre (7) comporte une paroi frontale (7a) présentant une ouverture (7b), et deux parois latérales opposées (7c, 7d) dont les bords latéraux (7e,7f)) sont pliés en équerre et comportent les agrafes (13 à18) ou ouvertures précitées.

3. Coffret selon la revendication 1 ou 2, caractérisé en ce que les agrafes précitées (13 à 18) sont formées par des languettes réalisées par découpage et déformation de la matière des parois (3,4 ou 7) dans lesquelles elles sont formées et s'étendent sensiblement parallèlement à ces parois.

4. Coffret selon l'une quelconque des revendications 1 à 3, caractérisé en ce que les deux bords latéraux (7e,7f) du cadre (7) comportent respectivement deux séries d'agrafes (13,14,15) et (16,17,18) orientées respectivement vers le haut et vers le bas du coffret C, les agrafes d'une série (13,14,15) étant décalées en hauteur par rapport à celles (16, 17, 18) de l'autre série, les deux séries d' agrafes (13 à 18) coopérant avec deux séries d'ouvertures correspondantes (19, 20, 21)et(22, 23, 24) prévues dans les deux bords avant (3c, 4c) pliés en équerre des deux parois latérales du coffret (3, 4) .

5. Coffret selon l'une quelconque des revendications précédentes, caractérisé en ce qu'il comporte en outre une ferrure (24) formée d'une platine (25) dont les deux extrémités opposées (25a, 25b) sont pliées en équerre et sont destinées à être introduites dans des fentes correspondantes (30, 31) prévues le long d'un côté du cadre précité (7) pour constituer deux paumelles (26,27) permettant l'articulation du panneau avant (8).

6. Coffret selon la revendication 5, caractérisé en ce que la fixation de la ferrure (24) sur le cadre (7) est réalisée par soudage de la platine (25) sur la face arrière de la paroi frontale (7a) du cadre (7).

7. Coffret selon l'une des revendications 5 et 6, caractérisé en ce que l'un (25c) des bords longitudinaux de la platine précitée (25) est plié deux fois en équerre, de façon à former deux ailes perpendiculaires (28, 29) destinées à être introduites dans l'ouverture (7b) du cadre (7) lors du montage des paumelles précitées (26,27), la seconde aile formée (29) constituant alors une butée de limitation de l'ouverture du panneau avant (8).

8. Coffret selon l'une quelconque des revendications 1 à 7, caractérisé en ce que l'ouverture (7b) du cadre précité (7) comporte deux bords (a, b) respectivement supérieur et inférieur pliés en équerre.

9. Coffret selon les revendications 7 et 8, caractérisé en ce qu'il comporte en outre une seconde ferrure (34) constituée d'une platine (35) comportant au moins un bord longitudinal (35a) plié en équerre et fixé sur la face interne du cadre (7) après introduction de la platine (35) dans l'ouverture (7b) du cadre (7), ladite platine (35) formant avec la première aile (28) de la première ferrure (24) et les deux bords supérieur et inférieur pliés en équerre (a,b) de l'ouverture (7b) du cadre (7), un autre cadre (36) en saillie vers l'avant du coffret (C).

10. Coffret selon l'une quelconque des revendications précédentes, caractérisé en ce que les bords arrière (3a, 4a) et supérieur (3b, 4b) des parois latérales précitées (3, 4) sont pliés en équerre et comportent des ouvertures (11) ou agrafes coopérant avec des agrafes (12) ou respectivement des ouvertures prévues le long des bords latéraux (1a, 1b) de la paroi de fond précitée (1), et respectivement de la paroi formant toit (5).

11. Coffret selon l'une quelconque des revendications précédentes, caractérisé en ce que le bord supérieur (7g) du cadre (7) est plié en équerre et constitue une surface d'appui comportant des agrafes ou des ouvertures destinées à coopérer avec des ouvertures ou des agrafes (12) prévues le long du bord avant (5c) du toit (5).

12. Coffret selon l'une quelconque des revendications précédentes, caractérisé en ce que les paumelles précitées (26, 27) sont reliées de manière articulée à une porte (8) réversible comportant deux supports de filerie intégrés (37, 38) et réalisée par découpage et pliage à partir d'une tôle unique (39).

## Patentansprüche

1. Schaltkasten, der insbesondere zur Aufnahme eines elektrischen Schaltgeräts dient und bauartmäßig als quaderförmiges Gehäuse ausgebildet ist, das im wesentlichen eine Rückwand, die mit ihren beiden einander gegenüberliegenden Seitenrändern jeweils an zwei seitlichen Wänden und mit ihrem oberen bzw. unteren Rand an einer als Dach ausgebildeten oberen Wand bzw. einer als Auflage ausgebildeten unteren Wand befestigt ist, einen Rahmen, der die durch die Vorderränder der genannten seitlichen und oberen Wände gebildete Schaltkastenöffnung abdeckt, sowie eine Frontplatte umfaßt, die an einen der Seitenränder des genannten Rahmens angelenkt ist, um das Öffnen und Schließen des genannten Schaltkastens zu ermöglichen,
dadurch gekennzeichnet, daß der genannte Rahmen (7) mit seinen beiden Seitenrändern (7e, 7f) jeweils in zwei, durch 180°-Drehung des genannten Rahmens um seine Achse X erreichten, entgegengesetzten Positionen des Rahmens (7) an den beiden Vorderrändern (3c, 4c) der beiden seitlichen Wände (3, 4) des Schaltkastens (C) montiert werden kann und so ein Öffnen der Frontplatte (8) von der einen oder der anderen Seite des Schaltkastens (C) her ermöglicht, wobei die Befestigung des genannten Rahmens (7) mit Hilfe von, an den Seitenrändern (7e, 7f) des Rahmens (7) ausgebildeten Haken (13 bis 18) bzw. Aussparungen erfolgt, und die mit zugehörigen, an den Vorderrändern (3c, 4c) der genannten seitlichen Wände (3, 4) ausgebildeten Aussparungen (19 bis 24) bzw. Haken zusammenwirken, und daß die genannten Haken jeweils entgegengesetzte Ausrichtungen entlang der Seitenränder des Rahmens bzw. der Wände aufweisen.

2. Schaltkasten nach Anspruch 1, dadurch gekennzeichnet, daß der Rahmen (7) eine Vorderwand (7a) mit einer Öffnung (7b) und zwei einander gegenüberliegende Seitenwände (7c, 7d) umfaßt, deren Seitenränder (7e, 7f) abgewinkelt sind und die genannten Haken (13 bis 18) bzw. Öffnungen aufweisen.

3. Schaltkasten nach Anspruch 1 oder 2, dadurch gekennzeichnet, daß die genannten Haken (13 bis 18) als aus dem Material der Seitenwände (3, 4 oder 7), an denen sie angeordnet sind, herausgestanzte und umgeformte Fortsätze ausgebildet sind und sich annähernd parallel zu diesen Wänden erstrecken.

4. Schaltkasten nach irgendeinem der Ansprüche 1 bis 3, dadurch gekennzeichnet, daß die beiden Seitenränder (7e, 7f) des Rahmens (7) jeweils zwei Reihen von Haken (13, 14, 15) bzw. (16, 17, 18) umfassen, die zur Oberseite bzw. zur Unterseite des Schaltkastens C hin ausgerichtet sind, wobei die Haken einer Reihe (13, 14, 15) in bezug auf die Haken (16, 17, 18) der anderen Reihe in der Höhe versetzt angeordnet sind und die beiden Hakenreihen (13 bis 18) mit zwei zugehörigen Reihen von Aussparungen (19, 20, 21) bzw. (22, 23, 24) zusammenwirken, welche in den beiden abgewinkelten Vorderrändern (3c, 4c) der beiden seitlichen Wände (3, 4) des Schaltkastens ausgebildet sind.

5. Schaltkasten nach irgendeinem der vorhergehenden Ansprüche, dadurch gekennzeichnet, daß er des weiteren einen Beschlag (24) umfaßt, der aus einer Platte (25) besteht, deren beide, einander gegenüberliegenden Enden (25a, 25b) abgewinkelt sind und dazu dienen, durch an einer Längsseite des genannten Rahmens (7) ausgebildete Schlitze (30, 31) geführt zu werden, um zwei Türbänder (26, 27) zum Anlenken der Frontplatte (8) zu bilden.

6. Schaltkasten nach Anspruch 5, dadurch gekennzeichnet, daß die Befestigung des Beschlags (24) am Rahmen (7) durch Anschweißen der Platte (25) an der Rückseite der Vorderwand (7a) des Rahmens (7) erfolgt.

7. Schaltkasten nach einem der Ansprüche 5 und 6, dadurch gekennzeichnet, daß einer (25c) der Längsränder der genannten Platte (25) zweifach abgewinkelt ist, so daß zwei rechtwinklig zueinanderstehende Flanken (28, 29) gebildet werden, die dazu dienen, bei der Montage der genannten Türbänder (26,27) in die Öffnung (7b) des Rahmens (7) zu greifen, wobei die zweite Flanke (29) einen Öffnungsanschlag für die Frontplatte (8) bildet.

8. Schaltkasten nach irgendeinem der Ansprüche 1 bis 7, dadurch gekennzeichnet, daß die Öffnung (7b) des genannten Rahmens (7) je einen oberen und einen unteren abgewinkelten Rand (a, b) umfaßt.

9. Schaltkasten nach den Ansprüchen 7 und 8, dadurch gekennzeichnet, daß er des weiteren einen zweiten Beschlag (34) umfaßt, der aus einer Platte (35) mit mindestens einem abgewinkelten und nach dem Einführen der Platte (35) in die Öffnung (7b) des Rahmens (7) an der Innenseite des Rahmens (7) befestigten Längsrand (35a) besteht, wobei die genannte Platte (35) mit der ersten Flanke (28) des ersten Beschlags (24) sowie dem oberen und dem unteren abgewinkelten Rand (a, b) der Öffnung (7b) des Rahmens (7) einen nach vorn aus dem Schaltkasten (C) herausstehenden weiteren Rahmen (36) bildet

10. Schaltkasten nach irgendeinem der vorhergehenden Ansprüche, dadurch gekennzeichnet, daß die hinteren (3a, 4a) und oberen Ränder (3b, 4b) der genannten seitlichen Wände (3, 4) abgewinkelt sind und Aussparungen (11) bzw. Haken aufweisen, welche mit entlang der Seitenränder (1a, 1b) der genannten Rückwand (1) bzw. der das Dach (5) bildenden Wand ausgebildeten Haken (12) bzw. Öffnungen zusammenwirken.

11. Schaltkasten nach irgendeinem der vorhergehenden Ansprüche, dadurch gekennzeichnet, daß der Oberrand (7g) des Rahmens (7) abgewinkelt ist und eine Auflagefläche mit darin ausgebildeten Klammern bzw. Aussparungen bildet, die dazu dienen, mit entlang dem Vorderrand (5c) des Dachs (5) ausgebildeten Aussparungen bzw. Klammern (12) zusammenzuwirken.

12. Schaltkasten nach irgendeinem der vorhergehenden Ansprüche, dadurch gekennzeichnet, daß die genannten Türbänder (26, 27) an eine, zwei integrierte Kabelrinnen (37, 38) aufweisende und durch Ausstanzen und Abkanten aus einem Einzelblech (39) hergestellte, umkehrbare Tür (8) angelenkt sind.

## Claims

1. An enclosure designed in particular to house electrical switchgear and of the kind formed by a parallelepipedic case comprising mainly a back plate fixed by its two opposite side edges respectively to two side walls and by its upper and lower edges respectively to a top wall forming a roof and a bottom wall forming a support, a frame covering the opening of the enclosure defined by the front edges of the aforementioned side and top walls, and a front panel mounted articulated on one of the side edges of said frame to enable said enclosure to be opened and closed,
characterized in that said frame (7) can be fixed by its two side edges (7e, 7f) respectively onto the two front edges (3c, 4c) of the two side walls (3, 4) of the enclosure C, according to two reverse positions of the frame (7) obtained by a 180° rotation of said frame around its axis X enabling respectively opening of the front panel (8) on one side or the other of the enclosure (C), fixing of said frame (7) being achieved by means of fasteners (13 to 18) or openings provided in the side edges (7e, 7f) of the frame (7) and cooperating respectively with conjugate openings (19 to 24) or fasteners provided in the front edges (3c, 4c) of the afore-mentioned side walls (3, 4), and that said fasteners have opposite orientations along the side edges of the frame or of the walls.

2. The enclosure according to claim 1, characterized in that the frame (7) comprises a front wall (7a) presenting an opening (7b), and two opposite side walls (7c, 7d) whose side edges (7e, 7f) are folded at right angles and comprise the afore-mentioned fasteners (13 to 18) or openings.

3. The enclosure according to claim 1 or 2, characterized in that the afore-mentioned fasteners (13 to 18) are formed by tabs achieved by cutting and deformation of the material of the walls (3, 4 or 7) in which they are formed and extend appreciably parallel to these walls.

4. The enclosure according to any one of the claims 1 to 3, characterized in that the two side walls (7e, 7f) of the frame (7) respectively comprise two series of fasteners (13, 14, 15) and (16, 17, 18) oriented respectively towards the top and bottom of the enclosure C, the fasteners of one series (13, 14, 15) being staggered heightwise with respect to those (16, 17, 18) of the other series, the two series of fasteners (13 to 18) cooperating with two series of corresponding openings (19, 20, 21) and (22, 23, 24) provided in the two front edges (3c, 4c) folded at right angles of the two side walls (3, 4) of the enclosure.

5. The enclosure according to any one of the aforegoing claims, characterized in that it comprises in addition a metal band (24) formed by a plate (25) whose two opposite ends (25a, 25b) are folded at right angles and are designed to be inserted in corresponding slots (30, 31) provided along one side of the afore-mentioned frame (7) to form two hinge plates (26, 27) enabling articulation of the front panel (8).

6. The enclosure according to claim 5, characterized in that fixing of the metal band (24) on the frame (7) is achieved by welding of the plate (25) onto the rear face of the front wall (7a) of the frame (7).

7. The enclosure according to one of the claims 5 and 6, characterized in that one (25c) of the longitudinal edges of the afore-mentioned plate (25) is folded twice at right angles so as to form two perpendicular wings (28, 29) designed to be inserted in the opening (7b) of the frame (7) when the afore-mentioned hinge plates (26, 27) are fitted, the second wing formed (29) then constituting a stop limiting opening of the front panel (8).

8. The enclosure according to any one of the claims 1 to 7, characterized in that the opening (7b) of the afore-mentioned frame (7) comprises two respectively upper and lower edges (a, b) folded at right angles.

9. The enclosure according to claims 7 and 8, characterized in that it comprises in addition a second metal band (34) formed by a plate (35) comprising at least one longitudinal edge (35a) folded at right angles and fixed onto the internal face of the frame (7) after the plate (35) has been inserted in the opening (7b) of the frame (7), said plate (35) forming with the first wing (28) of the first metal band (24) and the two upper and lower edges folded at right angles (a, b) of the opening (7b) of the frame (7), another frame (36) protruding towards the front of the enclosure (C).

10. The enclosure according to any one of the foregoing claims, characterized in that the rear edges (3a, 4a) and upper edges (3b, 4b) of the afore-mentioned side walls (3, 4) are folded at right angles and comprise openings (11) or fasteners cooperating with fasteners (12) or respectively openings provided along the side walls (1a, 1b) of the afore-mentioned back plate (1), and respectively of the wall forming the roof (5).

11. The enclosure according to any one of the foregoing claims, characterized in that the upper edge (7g) of the frame (7) is folded at right angles and constitutes a bearing surface comprising fasteners or openings designed to cooperate with openings or fasteners (12) provided along the front edge (5c) of the roof (5).

12. The enclosure according to any one of the foregoing claims, characterized in that the afore-mentioned hinge plates (26, 27) are joined in articulated manner to a reversible door (8) comprising two integrated wiring supports (37, 38) and achieved by cutting and folding from a single sheet metal plate (39).
